# EUROPEAN PATENT APPLICATION

(11) **EP 3 139 531 A1**
(43) Date of publication of application: **08.03.2017**
(21) Application number: 14893223.9
(22) Date of filing: 19.09.2014
(51) Int. Cl.: H04L 1/18, H04L 1/16

(54) **HYBRID AUTOMATIC REPEAT REQUEST PROCESS INDICATION METHOD, APPARATUS AND SYSTEM**

(30) Priority: 30.05.2014 CN 201410241852
(71) Applicant: ZTE Corporation, Shenzhen, Guangdong 518057 (CN)
(72) Inventor: PENG, Focai, Shenzhen Guangdong 518057 (CN); XIA, Shuqiang, Shenzhen Guangdong 518057 (CN); GOU, Wei, Shenzhen Guangdong 518057 (CN); HAN, Xiaogang, Shenzhen Guangdong 518057 (CN); DAI, Bo, Shenzhen Guangdong 518057 (CN); HAN, Cuihong, Shenzhen Guangdong 518057 (CN); HU, Liujun, Shenzhen Guangdong 518057 (CN); ZHANG, Junfeng, Shenzhen Guangdong 518057 (CN); ZHAO, Yajun, Shenzhen Guangdong 518057 (CN); XU, Jun, Shenzhen Guangdong 518057 (CN)
(74) Representative: Benson, Christopher
(86) International application number: PCT/CN2014/086968
(87) International publication number: WO 2015/180308

(57) **Abstract**

The present invention discloses a hybrid automatic repeat request process indication method, apparatus and system. Herein the method includes: a base station configuring a plurality of carriers for a user equipment, herein the a plurality of carriers include one or more unlicensed carriers; and for each unlicensed carrier, the base station indicating to the user equipment a carrier for transmitting an HARQ process of the unlicensed carrier.

## Description

### Technical Field

The present invention relates to the communication field, and in particular to a Hybrid Automatic Repeat reQuest (HARQ) process indication method, apparatus and system.

### Background of the Related Art

An unlicensed carrier (unlicensed spectrum) refers to a spectrum (or carrier) which can be used directly without the authorization under the condition of meeting relevant regulations (radio control) of government departments (e.g., the National Radio Management Committee). For example, microwave ovens, remote-control toy aircrafts, wireless mouse, wireless keyboards, Wireless Fidelity (WiFi), and so on all use the unlicensed carrier.

Since all kinds of devices can use the unlicensed carriers, and they may interfere with each other, an error may occur in the data transmitted on the unlicensed carriers. In the WiFi system, it can deal with that error through an Automatic Repeat reQuest (hereinafter referred to as ARQ).

In some cases, the unlicensed carriers need to be used through competition. If a base station (including a WiFi access point) does not obtain resources through competition, then it cannot use the unlicensed carrier.

The Long Term Evolution (LTE) is a mobile communication system running on a licensed carrier and launched by the third generation mobile communication partnership project (3GPP). The LTE currently has a total of 4 fully backward compatible stable versions, Rel-8 to Rel-11, herein the Rel-10 and the Rel-11 support a Carrier Aggregation (hereinafter referred to as CA) function. The LTE-A system supports up to a CA of 5 carriers.

In the CA, each cell has an identity: a serving cell index. At present, the serving cell index is an integer ranging from 0 to 7.

In the CA, the carrier (cell) where the UE establishes a radio resource control with the base station is called a primary cell (primary carrier). Other carriers (cells) are called secondary cells (secondary carriers). Herein the "serving cell index" value of the primary carrier is always "0".

In the CA, each carrier can be scheduled by itself (self-scheduling; non-cross-carrier scheduling), and can also have other carriers to schedule itself (cross-carrier scheduling). The primary carrier cannot perform the cross-carrier scheduling (the primary carrier can only be scheduled by itself).

In the LTE system, if a certain transmission block is transmitted incorrectly, then retransmission and/or combination is performed by an HARQ mechanism. One transmission block is equivalent to one HARQ process without considering multi-antenna transmission. The HARQ can successfully transmit a transmission block more quickly compared to the ARQ.

In the CA technology, the HARQ process of each component carrier is completely independent. An HARQ process of a carrier cannot be transmitted through other carriers.

According to downlink control information formats (DCI formats) in section 5.3.3.1 of TS36.212-b20 Multiplexing and channel coding of the 3GPP protocol, there is a 0-bit or 3-bit Carrier indicator field (CIF) in the dedicated scheduling DCI format (e.g., DCI 0, DCI 1, DCI2, etc.), herein the "0 bit" indicates that there is no "Carrier indicator field"; whether it exists is configured by a higher layer. The "Carrier indicator field" represents that which carrier is scheduled by this DCI (target carrier, in view of the value, it is equal to the above "serving cell index". For example, the value of these 3 bits of CIF is "000", which indicates that the scheduled carrier is a primary carrier).

In the CA technology, if it is a self-scheduling, then the CIF may appear or may not appear in the DCI (which is related to the configuration of the base station). If it is a cross-carrier scheduling, then the CIF will appear in the DCI.

According to the Enhanced Physical Downlink Control Channel formats (EPDCCH formats) in section 6.8A.1 of the TS36.211-b50 Physical Channels and Modulation of the 3GPP protocol, the EPDCCH can also carry the above DCI. That is, the EPDCCH can also have the "Carrier indicator field" thereon.

According to the section 6.3.2 of TS36.331-b30 Radio Resource Control (RRC) of the 3GPP protocol, one UE can configure up to 2 EPDCCH sets (can also not configure).

According to the Modulation order determination in section 7.1.7.1 of TS36.213-b20 Physical layer procedures of the 3GPP protocol, a base station can use one of 32 Modulation Coding Schemes (MCSs), which are MCS 0 to MCS 31 (the MCS is included in the DCI) when scheduling a UE. Herein, MCS29, 30 and 31 are used for retransmissions of QPSK, 16QAM and 64QAM respectively. Considering that 256QAM will be introduced in the future, the MCS28, 29, 30 and 31 will be used for the retransmissions of QPSK, 16QAM, 64QAM and 256QAM respectively in the future. Certainly, the MCS0 to the MCS27 (or 28) can also be used for the retransmissions of QPSK, 16QAM, 64QAM and 256QAM.

The "LTE in Unlicensed spectrum" (LTE-U) is put forward in the 62nd plenary session of the 3GPP radio access network (hereinafter referred to as RAN) held in 3-6 December 2013. That is, the LTE-U can work by the way of CA - herein, the licensed carrier provides the control information (such as the above mentioned DCI), and the unlicensed carrier is only used to transmit data. Of course, the LTE-U can also be operated independently.

Similar to the problems described above in the WiFi system, an error may also occur in the data transmission (i.e., the HARQ process) on the unlicensed carrier of the LTE-U system.

In view of the problem in related art that the LTE-U system cannot solve the errors occurring in the data transmission on the unlicensed carrier, no effective solution has been proposed at present.

### Summary of the Invention

In view of the above problem existed in the related art, the present invention provides a hybrid automatic repeat request (HARQ) process indication and processing method, apparatus and system to solve at least the above problem.

According to one aspect of the present invention, a hybrid automatic repeat request (HARQ) process indication method is provided, including: a base station configuring a plurality of carriers for a user equipment, herein the plurality of carriers include one or more unlicensed carriers; and for each of the unlicensed carriers, the base station indicating to the user equipment a carrier for transmitting an HARQ process of the unlicensed carrier.

Alternatively, for each of the unlicensed carriers, the base station indicating to the user equipment a carrier for transmitting an HARQ process of the unlicensed carrier includes: the base station configuring one or more carriers in the plurality of carriers to be with or without a Carrier indicator field (CIF); and the base station indicating to the user equipment a carrier for transmitting an HARQ process of each of the unlicensed carrier through the CIF.

Alternatively, for each of the unlicensed carriers, the base station indicating to the user equipment a carrier for transmitting an HARQ process of the unlicensed carrier includes: the base station indicating to the user equipment a carrier for transmitting an HARQ process of each of the unlicensed carriers through Modulation Coding Scheme (MCS) in downlink control information (DCI).

Alternatively, for each of the unlicensed carriers, the base station indicating to the user equipment a carrier for transmitting an HARQ process of the unlicensed carrier includes: the base station configuring one or more Enhanced Physical Downlink Control Channel (EPDCCH) sets for the user equipment; the base station dividing the one or more EPDCCH sets into a plurality of EPDCCH subsets on time or/and enhanced control channel unit resources; and the base station indicating to the user equipment a carrier for transmitting an HARQ process of each of the unlicensed carriers through one of the EPDCCH sets and/or one of the EPDCCH subsets.

Alternatively, one of the EPDCCH sets includes: a first EPDCCH set or a second EPDCCH set in the plurality of EPDCCH sets; and/or one of the EPDCCH subsets is located on any one or more EPDCCH sets in the plurality of EPDCCH sets.

Alternatively, the carrier for transmitting the HARQ process of the unlicensed carrier includes one of the following: the unlicensed carrier, a licensed carrier in the plurality of carriers, and other unlicensed carriers except the unlicensed carrier in the plurality of carriers.

Alternatively, the plurality of carriers include: a licensed shared access (LSA) carrier and/or a TV white space (TVWS) carrier.

Alternatively, the HARQ process includes new transmission and retransmission of data.

According to another aspect of the present invention, a processing method of a hybrid automatic repeat request (HARQ) process is provided, including: a user equipment determining a carrier for transmitting an HARQ process of an unlicensed carrier according to an indication of a base station, herein the base station configures a plurality of carriers for the user equipment, and the plurality of carriers include one or more of the unlicensed carriers; and the user equipment receiving and/or transmitting the HARQ process of the unlicensed carrier on the determined carrier.

Alternatively, before the user equipment determines a carrier for transmitting the HARQ process of the unlicensed carrier according to the indication of the base station, the method further includes: the base station configuring each carrier in the plurality of carriers to be with or without a Carrier indicator field (CIF), and indicating to the user equipment a carrier for transmitting an HARQ process of each of the unlicensed carriers through the CIF; and the user equipment determining a carrier for transmitting the HARQ process of the unlicensed carrier according to the indication of the base station includes: the user equipment determining a carrier for transmitting the HARQ process of the unlicensed carrier according to the Carrier indicator field (CIF).

Alternatively, before the user equipment determines a carrier for transmitting the HARQ process of the unlicensed carrier according to the indication of the base station, the method further includes: the base station indicating to the user equipment a carrier for transmitting an HARQ process of each of the unlicensed carriers through Modulation Coding Scheme (MCS) in downlink control information (DCI); and the user equipment determining a carrier for transmitting the HARQ process of the unlicensed carrier according to the indication of the base station includes: the user equipment determining a carrier for transmitting the HARQ process of the unlicensed carrier according to the MCS in the DCI.

Alternatively, before the user equipment determines a carrier for transmitting the HARQ process of the unlicensed carrier according to the indication of the base station, the method further includes: the base station configuring one or more Enhanced Physical Downlink Control Channel (EPDCCH) sets for the user equipment, dividing the one or more EPDCCH sets into a plurality of EPDCCH subsets on time or/and enhanced control channel unit resources; and indicating to the user equipment a carrier for transmitting an HARQ process of each of the unlicensed carriers through one of the EPDCCH sets and/or one of the EPDCCH subsets; and the user equipment determining a carrier for transmitting the HARQ process of the unlicensed carrier according to the indication of the base station includes: the user equipment determining a carrier for transmitting an HARQ process of an unlicensed carrier according to one of the EPDCCH sets and/or one of the EPDCCH subsets.

Alternatively, the carrier for transmitting the HARQ process of the unlicensed carrier includes one of the following: the unlicensed carrier, a licensed carrier in the plurality of carriers, and other unlicensed carriers except the unlicensed carrier in the plurality of carriers.

Alternatively, the plurality of carriers include: a licensed shared access (LSA) carrier and/or a TV white space (TVWS) carrier.

According to still another aspect of the present invention, a hybrid automatic repeat request (HARQ) process indication apparatus is provided, including: a configuration module, configured to configure a plurality of carriers for a user equipment, wherein the plurality of carriers include one or more unlicensed carriers; and an indication module, configured to: for each of the unlicensed carriers, indicate to the user equipment a carrier for transmitting an HARQ process of the unlicensed carrier by the base station.

Alternatively, the configuration module is further configured to configure each carrier of the plurality of carriers to be with or without a Carrier indicator field (CIF); and the indication module indicates to the user equipment a carrier for transmitting an HARQ process of each of the unlicensed carriers through the CIF.

Alternatively, the indication module is further configured to indicate to the user equipment to transmit a carrier of an HARQ process of each of the unlicensed carriers through Modulation Coding Scheme (MCS) in downlink control information (DCI).

Alternatively, the configuration module is further configured to configure one or more Enhanced Physical Downlink Control Channel (EPDCCH) sets for the user equipment, and divide the one or more EPDCCH sets into a plurality of EPDCCH subsets on time or/and enhanced control channel unit resources; and the indication module is configured to indicate to the user equipment a carrier for transmitting an HARQ process of each of the unlicensed carriers through one of the EPDCCH sets and/or one of the EPDCCH subsets.

According to still another aspect of the present invention, a processing apparatus of a hybrid automatic repeat request (HARQ) process is provided, including: a determination module, configured to determine a carrier for transmitting an HARQ process of an unlicensed carrier according to an indication of a base station, herein the base station configures a plurality of carriers for the user equipment, and the plurality of carriers include one or more of the unlicensed carriers; and a processing module, configured to receive and/or transmit the HARQ process of the unlicensed carrier on the determined carrier.

Alternatively, the determination module determines a carrier for transmitting an HARQ process of an unlicensed carrier in one of the following ways: determining a carrier for transmitting an HARQ process of an unlicensed carrier according to a Carrier indicator field (CIF); determining a carrier for transmitting an HARQ process of an unlicensed carrier according to Modulation Coding Scheme (MCS) in downlink control information (DCI); and determining a carrier for transmitting an HARQ process of an unlicensed carrier according to one of Enhanced Physical Downlink Control Channel (EPDCCH) sets and/or one of the EPDCCH subsets.

According to still another aspect of the present invention, a base station is provided, including the above hybrid automatic repeat request (HARQ) process indication apparatus.

According to still another aspect of the present invention, a user equipment is provided, including the above processing apparatus of a hybrid automatic repeat request (HARQ) process.

According to still another aspect of the present invention, a transmission system of a hybrid automatic repeat request (HARQ) process is provided, including the above base station and the user equipment.

With the present invention, a base station indicates to a user equipment a carrier for transmitting an HARQ process of an unlicensed carrier after configuring a plurality of carriers for the user equipment, so that it can perform the hybrid automatic retransmission through an indicated carrier for transmitting the HARQ process when there is an error in the data transmission on the unlicensed carrier, and ensure the reliability of the data transmission on the unlicensed carrier.

### Brief Description of Drawings

The accompanying drawings described herein are used to provide a further understanding of the present invention and constitute a part of this application, and the exemplary embodiments of the present invention and the descriptions thereof are used to explain the present invention and do not constitute an inappropriate limitation of the present invention. Herein:
FIG. 1 is a flow chart of an HARQ process indication method according to an embodiment of the present invention.
FIG. 2 is a flow chart of a processing method of an HARQ process according to an embodiment of the present invention.
FIG. 3 is a structural schematic diagram of an HARQ process indication apparatus according to an embodiment of the present invention.
FIG. 4 is a structural schematic diagram of a processing apparatus of an HARQ process according to an embodiment of the present invention.
FIG. 5 is a schematic diagram of an operation process of the first embodiment.
FIG. 6 is a schematic diagram of an operation process of the tenth embodiment.
FIG. 7 is a schematic diagram of an operation process of a specific eleventh embodiment.

### Specific Embodiments

The present invention is described in detail with reference to the drawings and in conjunction with embodiments hereinafter. It should be noted that the embodiments in the application and features in the embodiments can be combined with each other without conflicts.

According to an embodiment of the present invention, a hybrid automatic repeat request (HARQ) process indication method is provided.

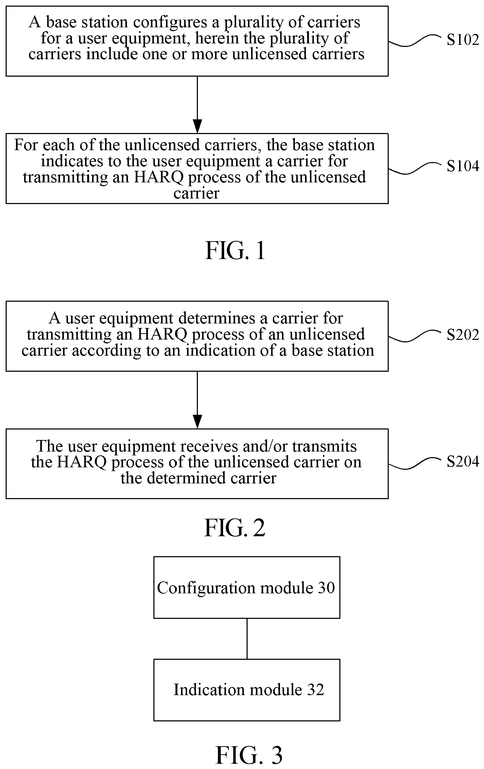

FIG. 1 is a flow chart of an HARQ process indication method according to an embodiment of the present invention. As shown in FIG. 1, the method mainly includes step S102 and step S104.

In step S102, a base station configures a plurality of carriers for a user equipment, herein the plurality of carriers include one or more unlicensed carriers.

In step S104, for each of the unlicensed carriers, the base station indicates to the user equipment a carrier for transmitting an HARQ process of the unlicensed carrier.

In the specific implementation process, the step S104 may include the following alternative embodiments:
(1) the base station indicates through the CIF. In this alternative embodiment, the base station first configures one or more carriers in the above a plurality of carriers to be with or without the CIF, and then indicates to the user equipment a carrier for transmitting the HARQ process of the unlicensed carrier through the CIF. For example, if the CIF only exists in one licensed carrier (e.g., a primary carrier) in the plurality of carriers, and its value is "000", then "CIF==010" may represent new transmission of the unlicensed carrier, and "CIF==110" may represent that a retransmission of the unlicensed carrier is performed on the licensed carrier.
(2) The base station indicates through the MCS in the DCI. In this alternative embodiment, the base station indicates to the user equipment a carrier for transmitting the HARQ process of the unlicensed carrier through the MCS in the DCI. In this alternative embodiment, if the MCS of the carrier is a MCS reserved for QPSK, 16QAM, 64QAM and 256QAM retransmission, it indicates that it is required to determine which carrier is used to retransmit the HARQ process of the unlicensed carrier according to the MCS, that the real MCS is the same as that of the first transmission, and which unlicensed carrier is scheduled may be acquired through the CIF information.
(3) the base station indicates through an EPDCCH set or an EPDCCH subset. In this alternative embodiment, the base station first configures one or more Enhanced Physical Downlink Control Channel (EPDCCH) sets for the user equipment, and then the base station divides the one or more EPDCCH sets into a plurality of EPDCCH subsets on time or/and enhanced control channel unit resources, and the base station indicates to the user equipment a carrier for transmitting a HARQ process of each of the unlicensed carriers through one of the EPDCCH sets and/or one of the EPDCCH subsets. In this alternative embodiment, the carrier for transmitting the HARQ process of the unlicensed carrier includes one of the following: the unlicensed carrier itself, a licensed carrier in the plurality of carriers, and other unlicensed carriers except the unlicensed carrier in the plurality of carriers. In this alternative embodiment, one of the EPDCCH sets may be a first EPDCCH set or a second EPDCCH set or other EDPCCH sets in the plurality of EPDCCH sets; and/or one of the EPDCCH subsets can be located on any one or more EPDCCH sets in the plurality of EPDCCH sets.

In the embodiment of the present invention, if the HARQ of the unlicensed carrier is configured to be transmitted on the licensed carrier, the success rate of the HARQ can be improved and the number of retransmissions can be reduced because reliability of the licensed carrier is and no competition is required.

In the embodiment of the present invention, the above plurality of carriers include: a licensed shared access (LSA) carrier and/or a TV white space (TVWS) carrier.

In various alternative embodiments, the HARQ process includes new transmission and retransmission of data. The HARQ process may be an HARQ of uplink data, and may also be an HARQ of downlink data, and is not specifically limited in the embodiment of the present invention.

With the embodiment of the present invention, by indicating a carrier for transmitting an HARQ process of an unlicensed carrier, when there is an error in the data transmission on an unlicensed carrier, the HARQ retransmission is performed through an indicated carrier for transmitting the HARQ process of the unlicensed carrier, thus solving the problem that a failure of data transmission is caused by the uncertainty of the unlicensed carrier resources and improving the reliability of data transmission on the unlicensed carrier.

Corresponding to the above HARQ process indication method, an embodiment of the present invention further provides a processing method of an HARQ process, and the method is applied to a user equipment side.

FIG. 2 is a flow chart of a processing method of an HARQ process according to an embodiment of the present invention. As shown in FIG. 2, the method mainly includes step S202 and step S204.

In step S202, a user equipment determines a carrier for transmitting an HARQ process of an unlicensed carrier according to an indication of a base station, herein the base station configures a plurality of carriers for the user equipment, and the a plurality of carriers include one or more of the unlicensed carriers.

In step S204, the user equipment receives and/or transmits the HARQ process of the unlicensed carrier on the determined carrier.

Corresponding to the three alternative embodiments of the step S104 in the above HARQ process indication method, the step S202 may also have the following three alternative embodiments.
(1) If the base station indicates to the user equipment a carrier for transmitting an HARQ process of each of the unlicensed carriers through the CIF, then the user equipment determines the carrier for transmitting the HARQ process of the unlicensed carrier according to the Carrier indicator field (CIF).
(2) If the base station indicates to the user equipment a carrier for transmitting an HARQ process of each of the unlicensed carriers through the MCS, then the user equipment determines the carrier for transmitting the HARQ process of the unlicensed carrier according to the MCS in the DCI.
(3) If the base station indicates to the user equipment a carrier for transmitting an HARQ process of each of the unlicensed carriers through one EPDCCH set and/or one EPDCCH subset, then the user equipment determines the carrier for transmitting the HARQ process of the unlicensed carrier according to the EPDCCH set and/or the one EPDCCH subset. In this alternative embodiment, the carrier for transmitting the HARQ process of the unlicensed carrier includes one of the following: the unlicensed carrier itself, a licensed carrier in the plurality of carriers, and other unlicensed carriers except the unlicensed carrier in the plurality of carriers.

In the embodiment of the present invention, if the HARQ of the unlicensed carrier is configured to be transmitted on the licensed carrier, the success rate of the HARQ can be improved and the number of retransmissions can be reduced because reliability of the licensed carrier is high and no competition is required.

In the embodiment of the present invention, the above plurality of carriers include: a licensed shared access (LSA) carrier and/or a TV white space (TVWS) carrier.

Corresponding to the above HARQ process indication method, an embodiment of the present invention further provides an HARQ process indication apparatus, and the apparatus is used to implement the above HARQ process indication method.

FIG. 3 is a structural schematic diagram of an HARQ process indication apparatus according to an embodiment of the present invention. As shown in FIG. 3, the apparatus mainly includes: a configuration module 30, configured to configure a plurality of carriers for a user equipment, herein the plurality of carriers include one or more unlicensed carriers; and an indication module 32, configured to: for each of the unlicensed carrier, indicate to, by the base station, the user equipment a carrier for transmitting an HARQ process of the unlicensed carrier.

Alternatively, the configuration module 30 is further configured to configure each carrier in the plurality of carriers to be with or without a Carrier indicator field (CIF); and the indication module 32 indicates to the user equipment a carrier for transmitting an HARQ process of each of the unlicensed carriers through the CIF.

Alternatively, the indication module 32 is further configured to indicate to the user equipment a carrier for transmitting an HARQ process of each of the unlicensed carriers through Modulation Coding Scheme (MCS) in downlink control information (DCI).

Alternatively, the configuration module 30 is further configured to configure one or more Enhanced Physical Downlink Control Channel (EPDCCH) sets for the user equipment, and divide the one or more EPDCCH sets into a plurality of EPDCCH subsets on time or/and enhanced control channel unit resources; and the indication module 32 is configured to indicate to the user equipment a carrier for transmitting an HARQ process of each of the unlicensed carriers through one of the EPDCCH sets and/or one of the EPDCCH subsets.

According to an embodiment of the present invention, a processing apparatus of an HARQ process is further provided, and configured to implement the above processing method of an HARQ process.

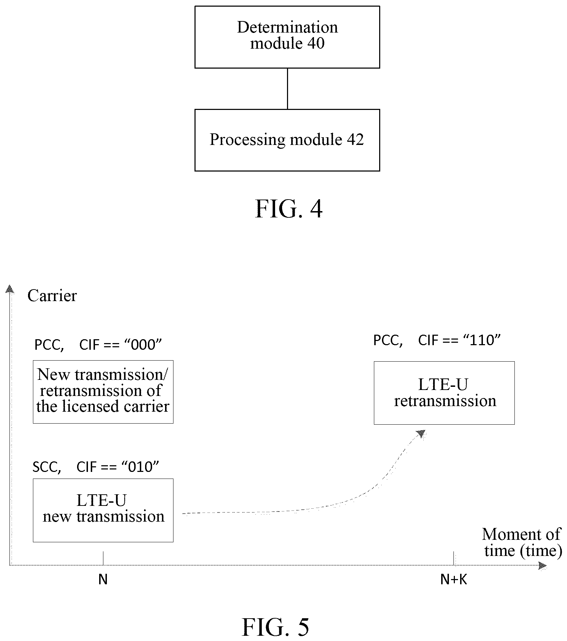

FIG. 4 is a structural schematic diagram of a processing apparatus of an HARQ process according to an embodiment of the present invention, as shown in FIG. 4, the apparatus mainly includes: a determination module 40, configured to determine a carrier for transmitting an HARQ process of an unlicensed carrier according to an indication of a base station, herein the base station configures a plurality of carriers for the user equipment, and the plurality of carriers include one or more of the unlicensed carriers; and a processing module 42, configured to receive and/or transmit the HARQ process of the unlicensed carrier on the determined carrier.

Alternatively, the determination module 40 may determine a carrier for transmitting an HARQ process of an unlicensed carrier in one of the following ways:
(1) determining a carrier for transmitting an HARQ process of the unlicensed carrier according to a Carrier indicator field (CIF);
(2) determining a carrier for transmitting an HARQ process of the unlicensed carrier according to Modulation Coding Scheme (MCS) in downlink control information (DCI); and
(3) determining a carrier for transmitting an HARQ process of the unlicensed carrier according to one Enhanced Physical Downlink Control Channel (EPDCCH) set and/or one of the EPDCCH subsets.

According to an embodiment of the present invention, a base station is further provided, and the base station includes the above HARQ process indication apparatus.

According to an embodiment of the present invention, a user equipment is further provided, including the above processing apparatus of an HARQ process.

According to an embodiment of the present invention, a transmission system of an HARQ process is further provided, including the above base station and the user equipment.

The technical solutions provided by the embodiments of the present invention are described by specific embodiments hereinafter.

### First Embodiment

In the present embodiment, it is assumed that a licensed carrier (CIF==000; and there are 3 bits in the CIF) and an unlicensed carrier are configured for a user equipment, the data of which carrier is retransmitted may be indicated by the CIF. For example, "CIF==000" represents new transmission/retransmission (the CIF of the PCC is always equal to "000") of the PCC (both PDCCH and EPDCCH are from the PCC). And "CIF==010" represents new transmission of an unlicensed carrier. "CIF==110" represents that the retransmission of an unlicensed carrier is performed on a licensed carrier.

As shown in FIG. 5, the base station schedules a newly transmitted HARQ process ("CIF==010") of the LTE-U carrier (unlicensed carrier) at time N. Assuming that there is an error in the process (or there is no unlicensed carrier resource at time N+K), the base station retransmits the HARQ process of the unlicensed carrier on the licensed carrier ("CIF==110") at the time N+K.

An HARQ process of an unlicensed carrier is retransmitted on a licensed carrier, which can be achieved by the method provided by the present embodiment.

### Second Embodiment

In the present embodiment, it is assumed that a licensed carrier (CIF==000) that is a PCC and 3 unlicensed carriers are configured for a user equipment, the data of which carrier is retransmitted may be indicated by the CIF. For example, "CIF==000" represents new transmission/retransmission of the PCC (the CIF of the PCC is always equal to "000"). "CIF==001" represents new transmission of a first unlicensed carrier. "CIF==101" represents that the retransmission of the first unlicensed carrier is performed on the licensed carrier. "CIF==010" represents new transmission of a second unlicensed carrier. "CIF==110" represents that the retransmission of the second unlicensed carrier is performed on the licensed carrier. "CIF==011" represents new transmission of a third unlicensed carrier. "CIF==111" represents that the retransmission of the third unlicensed carrier is performed on the licensed carrier. The method provided by the present embodiment can support an HARQ retransmission of at least three unlicensed carriers.

An HARQ process of an unlicensed carrier is retransmitted on a licensed carrier, which can also be achieved by the method provided by the present embodiment.

### Third Embodiment

In the present embodiment, it is assumed that 2 licensed carriers are configured for a user equipment, and one of the licensed carrier is the PCC (CIF==000) and the other licensed carrier is a SCC1 ("schedulingCellInfo-r10" is configured as "own-r10" and "cif Presence-r10" is configured as "false"); and in addition, there are also 3 unlicensed carriers (i.e., there are a total of 5 carriers), the data of which carrier is retransmitted can be indicated by the CIF. For example, "CIF==000" represents new transmission/retransmission of the PCC (the CIF of the PCC is always equal to "000"). "CIF==001" represents new transmission of a first unlicensed carrier. "CIF==101" represents that the retransmission of the first unlicensed carrier is performed on the licensed carrier. "CIF==010" represents new transmission of a second unlicensed carrier. "CIF==110" represents that the retransmission of the second unlicensed carrier is performed on the licensed carrier. "CIF==011" represents new transmission of a third unlicensed carrier. "CIF==111" represents that the retransmission of the third unlicensed carrier is performed on the licensed carrier. The method provided by the present embodiment can support an HARQ retransmission of at least three unlicensed carriers.

An HARQ process of an unlicensed carrier is retransmitted on a licensed carrier, which can also be achieved by the method provided by the present embodiment.

### Fourth Embodiment

It is assumed that only one licensed carrier that is the PCC (it is specified in the present embodiment that there is no CIF in the PCC, that is, to give "CIF==000" away. But the PCC may still only be scheduled by itself; or the "schedulingCellInfo-r10" is configured as "own-r10" and the "cif Presence-r10" is configured as "false") and 4 unlicensed carriers are configured for a user equipment (i.e., there are a total of 5 carriers configured for the user equipment), the data of which carrier is retransmitted may be indicated by the CIF. For example, "CIF==001" represents new transmission of a first unlicensed carrier. "CIF==101" represents that the retransmission of the first unlicensed carrier is performed on the licensed carrier. "CIF==010" represents new transmission of a second unlicensed carrier. "CIF==110" represents that the retransmission of the second unlicensed carrier is performed on the licensed carrier. "CIF==011" represents new transmission of a third unlicensed carrier. "CIF==111" represents that the retransmission of the third unlicensed carrier is performed on the licensed carrier. "CIF==000" represents new transmission of a fourth unlicensed carrier. "CIF==100" represents that the retransmission of the fourth unlicensed carrier is performed on the licensed carrier.

The method provided by the present embodiment can support an HARQ retransmission of at least four unlicensed carriers.

An HARQ process of an unlicensed carrier is retransmitted on a licensed carrier, which can also be achieved by the method provided by the present embodiment.

### Fifth Embodiment

In the present embodiment, it is assumed that only one licensed carrier (CIF==000) that is the PCC and 2 unlicensed carriers are configured for a user equipment (i.e., there are a total of 3 carriers configured for the user equipment), the data of which carrier is retransmitted may be indicated by the CIF. For example, "CIF==000" represents new transmission/retransmission of the PCC (the CIF of the PCC is always equal to "000"). "CIF==001" represents new transmission/retransmission of a first unlicensed carrier (both of which are on the first unlicensed carrier). "CIF==101" represents that the retransmission of the first unlicensed carrier is performed on the licensed carrier. "CIF==111" represents that the retransmission of the first unlicensed carrier is performed on a second unlicensed carrier. "CIF==010" represents new transmission/retransmission of the second unlicensed carrier (both of which are on the second unlicensed carrier). "CIF==110" represents that the retransmission of the second unlicensed carrier is performed on the licensed carrier. "CIF==011" represents that the retransmission of the second unlicensed carrier is performed on the first unlicensed carrier. The method provided by the present embodiment can support an HARQ retransmission of at least two unlicensed carriers.

An HARQ process of an unlicensed carrier is retransmitted on a carrier (including a licensed carrier and an unlicensed carrier), which can also be achieved by the method provided by the present embodiment.

### Sixth Embodiment

In the present embodiment, it is assumed that only one licensed carrier that is the PCC (it is specified in the present embodiment that there is no CIF in the PCC; or the "schedulingCellInfo-r10" is configured as "own-r10" and the "cif Presence-r10" is configured as "false") and 3 unlicensed carriers are configured for a user equipment (in this way, there are 4 carriers in total), the data of which carrier is retransmitted may be indicated by the CIF. For example, "CIF==001" represents new transmission/retransmission of a first unlicensed carrier (both of which are on the first unlicensed carrier). "CIF==101" represents that the retransmission of the first unlicensed carrier is performed on the licensed carrier. "CIF==111" represents that the retransmission of the first unlicensed carrier is performed on a second unlicensed carrier. "CIF==010" represents new transmission/retransmission of the second unlicensed carrier (both of which are on the second unlicensed carrier). "CIF==110" represents that the retransmission of the second unlicensed carrier is performed on the licensed carrier. "CIF==011" represents that the retransmission of the second unlicensed carrier is performed on the first unlicensed carrier. "CIF==000" represents new transmission/retransmission of a third unlicensed carrier (both of which are on the third unlicensed carrier). "CIF==100" represents that the retransmission of the third unlicensed carrier is performed on the licensed carrier.

An HARQ process of an unlicensed carrier is retransmitted on a number of specified carriers (including a licensed carrier and an unlicensed carrier), which can be achieved by the method provided by the present embodiment.

### Seventh Embodiment

In the present embodiment, it is specified that a first EPDCCH set is used for new transmission/retransmission on an unlicensed carrier, and a second EPDCCH set is used to retransmit the HARQ process which is originally transmitted on the unlicensed carrier, on a licensed carrier.

The method provided by the present embodiment can retransmit an HARQ process of an unlicensed carrier on a licensed carrier through different EPDCCH sets.

### Eighth Embodiment

In the present embodiment, a third EPDCCH set is introduced and is specified to be used to retransmit data that is originally transmitted on an unlicensed carrier, on a licensed carrier.

The method provided by the present embodiment can retransmit an HARQ process of an unlicensed carrier on a licensed carrier through different EPDCCH sets.

### Ninth Embodiment

In the present embodiment, the EPDCCH set is divided into many segments of which the number is same as the number of unlicensed carriers configured for a UE on time, and can be divided equally. For example, if there are 2 unlicensed carriers (e.g., an odd sub-frame is a first segment, and an even sub-frame is a second segment), then it is divided into 2 segments; if there are 3 unlicensed carriers, then it is divided into 3 segments (e.g., every 3 sub-frames is one segment starting from the sub-frame 0, and there are totally 3 segments), and it is specified that the EPDCCH set is used to retransmit the data that is originally transmitted on different unlicensed carriers, on the licensed carrier in different time periods. If the number of segments divided for the EPDCCH set is sufficient, then it can achieve "retransmission on any carrier".

The method provided by the present embodiment can retransmit an HARQ process of an unlicensed carrier on a licensed carrier through different EPDCCH subsets (EPDCCH segments).

### Tenth Embodiment

In the present embodiment, the EPDCCH set is divided into segments of which the number is same as the number of unlicensed carriers configured for a UE on the resources. It can be divided equally. For example, if there are 2 unlicensed carriers (e.g., it is assumed that the EPDCCH set has 32 ECCEs, the ECCE0 to the ECCE15 should be the first segment, and the ECCE16 to the ECCE31 are the second segment), then it is divided into 2 segments; if there are 3 unlicensed carriers, then it is divided into 3 segments (e.g., it is assumed that the EPDCCH set has 32 ECCEs, the ECCE0 to the ECCE9 should be the first segment, the ECCE10 to the ECCE21 are the second segment and the ECCE22 to the ECCE31 are the third segment), and it is specified that the EPDCCH subset (EPDCCH segment )is used to retransmit the data that is originally transmitted on the unlicensed carriers, on the licensed carrier (various EPDCCH segment retransmit HARQ processes on different unlicensed carriers).

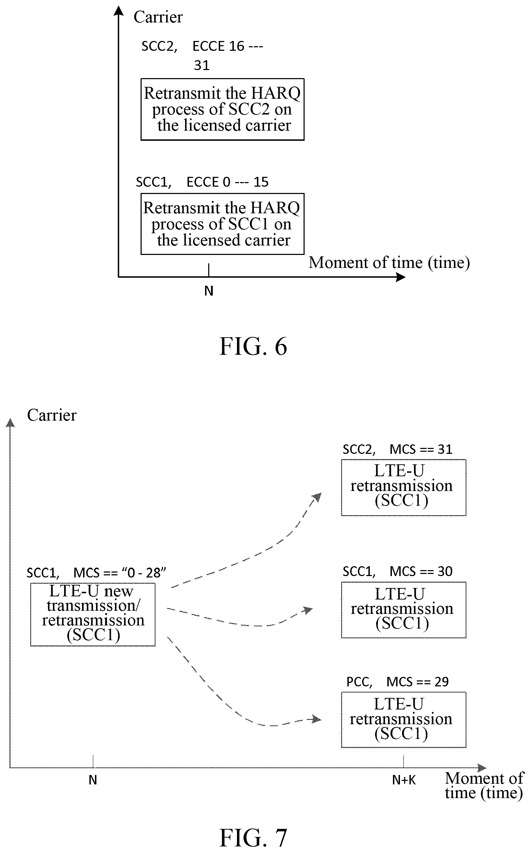

As shown in FIG. 6, the base station uses different ECCE segments (EPDCCH subsets) to schedule the HARQ retransmission processes of different LTE-U carriers (unlicensed carriers) at time N. Herein, the ECCE0 to the ECCE15 schedule the HARQ retransmission process (transmitted on the licensed carrier) of the first LTE-U carrier (PCC1), and the ECCE16 to the ECCE31 schedule the HARQ retransmission process (transmitted on the licensed carrier) of the second LTE-U carrier (SCC2).

The method provided by the present embodiment can retransmit an HARQ process of an unlicensed carrier on a licensed carrier through different EPDCCH subsets (EPDCCH segments).

### Eleventh Embodiment

In the present embodiment, it is assumed that only one licensed carrier that is the PCC and 2 unlicensed carriers are configured for a user equipment, and the 3 MCSs (MCS29, MCS30 and MCS31) are respectively used for retransmissions of QPSK, 16QAM and 64QAM, the data of which carrier is retransmitted may be indicated by the MCS. For example, "MCS0 to MCS28" represents that new transmission/retransmission of the unlicensed carrier is performed on the unlicensed carrier. "MCS29" represents that an HARQ process of an unlicensed carrier is retransmitted on a licensed carrier (the real MCS is same as that of the first transmission; the scheduled unlicensed carrier may be obtained from the CIF information). "MCS30" represents that an HARQ process of an unlicensed carrier is retransmitted on a first unlicensed carrier (the real MCS is same as that of the first transmission; the scheduled unlicensed carrier may be obtained from the CIF information). "MCS31" represents that an HARQ process of an unlicensed carrier is retransmitted on a second unlicensed carrier (the real MCS is same as that of the first transmission; the scheduled unlicensed carrier is the one which may be obtained from the CIF information).

As shown in FIG. 7, the base station schedules an HARQ new transmission/retransmission process ("MCS==0 --- 28") of the first LTE-U carrier (unlicensed carrier; SCC1) at time N. Assuming that there is an error in this process (or there is no unlicensed carrier resource at time N+K), the base station may retransmit an HARQ process of an unlicensed carrier on a licensed carrier at the time N+K ("MCS==29"), and may also retransmit its HARQ process on itself (the first unlicensed carrier) ("MCS==29"; If there is an error in the process and there are resources), and it may also retransmit its (SCC1) HARQ process through the second unlicensed carrier (SCC2).

The method provided by the present embodiment can retransmit an HARQ process of an unlicensed carrier on each carrier according to the MCS.

### Twelfth Embodiment

In the present embodiment, it is assumed that only one licensed carrier that is the PCC and 3 unlicensed carriers are configured for a UE, and the 4 MCSs (MCS28, MCS29, MCS30 and MCS31) are respectively used for retransmissions of QPSK, 16QAM, 64QAM and 256QAM, the data of which carrier is retransmitted may be indicated by the MCS. For example, "MCS0 to MCS27" represents that new transmission/retransmission of the unlicensed carrier is performed on the unlicensed carrier. "MCS28" represents that an HARQ process of an unlicensed carrier is retransmitted on a licensed carrier (the real MCS is same as that of the first transmission; the scheduled unlicensed carrier may be obtained from the CIF information). "MCS29" represents that an HARQ process of an unlicensed carrier is retransmitted on a first unlicensed carrier (the real MCS is same as that of the first transmission; the scheduled unlicensed carrier may be obtained from the CIF information). "MCS30" represents that an HARQ process of an unlicensed carrier is retransmitted on a second unlicensed carrier (the real MCS is same as that of the first transmission; the scheduled unlicensed carrier may be obtained from the CIF information). "MCS31" represents that an HARQ process of an unlicensed carrier is retransmitted on a third unlicensed carrier (the real MCS is same as that of the first transmission; the scheduled unlicensed carrier is the one which may be obtained from the CIF information).

The method provided by the present embodiment can retransmit an HARQ process of an unlicensed carrier on each carrier according to the MCS.

From the above descriptions, it can be seen that the embodiments of the present invention achieve the technical effects as follows: a base station indicates to a user equipment a carrier for transmitting an HARQ process of an unlicensed carrier after configuring a plurality of carriers for the user equipment, so that it can perform a hybrid automatic retransmission through an indicated carrier for transmitting an HARQ process when there is an error in the data transmission on the unlicensed carrier, and ensure the reliability of the data transmission on the unlicensed carrier. And, in an embodiment of the present invention, the CIF which takes the value of "000" does not necessarily mean that "the scheduled carrier is a primary carrier", but can also mean that "the scheduled carrier is a secondary carrier". In addition, in an embodiment of the present invention, an HARQ process on an unlicensed carrier of the UE can be switched to another carrier, for example, be switched to a licensed carrier for transmission. The number of HARQ retransmissions can be reduced, and the success rate of the data transmission can be improved because reliability of the licensed carrier is high and no competition is required.

Obviously, it should be understood by those skilled in the art that each module or each step described above in the present invention can be implemented with a general-purpose computing apparatus, and they can be centralized on a single computing apparatus, or distributed in a network constituted by a plurality of computing apparatus. Alternatively, they can be implemented with program codes executable by a computing apparatus, thereby they can be stored in a storage device and executed by a computing apparatus, and in some cases, the steps shown or described can be executed in a sequence different from that described herein, or they may be made into various integrated circuit modules respectively, or a plurality of modules or steps of them may be made into a single integrated circuit module to implement. Therefore, the present invention is not limit to any specific combination of hardware and software.

The above description is only preferred embodiments of the present invention and is not intended to limit the present invention. For those skilled in the art, the present invention can have various modifications and variations. Any modification, equivalent replacement, improvement, etc. made within the essence and principle of the present invention shall be included within the protection scope of the invention.

### Industrial Applicability

As described above, with the above embodiments and the preferred embodiments, it can perform a hybrid automatic retransmission through an indicated carrier for transmitting an HARQ process when there is an error in the data transmission on an unlicensed carrier, which ensures the reliability of data transmission on the unlicensed carrier.

## Claims

1. A hybrid automatic repeat request HARQ process indication method, comprising:
a base station configuring a plurality of carriers for a user equipment, wherein the plurality of carriers comprise one or more unlicensed carriers; and
for each of the unlicensed carriers, the base station indicating to the user equipment a carrier for transmitting an HARQ process of the unlicensed carrier.

2. The method according to claim 1, wherein, for each of the unlicensed carriers, the base station indicating to the user equipment a carrier for transmitting an HARQ process of the unlicensed carrier comprises:
the base station configuring one or more carriers in the plurality of carriers to be with or without a Carrier indicator field CIF; and
the base station indicating to the user equipment a carrier for transmitting an HARQ process of each of the unlicensed carriers through the CIF.

3. The method according to claim 1, wherein, for each of the unlicensed carriers, the base station indicating to the user equipment a carrier for transmitting an HARQ process of the unlicensed carrier comprises:
the base station indicating to the user equipment a carrier for transmitting an HARQ process of each of the unlicensed carriers through Modulation Coding Scheme MCS in downlink control information DCI.

4. The method according to claim 1, wherein, for each of the unlicensed carriers, the base station indicating to the user equipment a carrier for transmitting an HARQ process of the unlicensed carrier comprises:
the base station configuring one or more Enhanced Physical Downlink Control Channel EPDCCH sets for the user equipment;
the base station dividing the one or more EPDCCH sets into a plurality of EPDCCH subsets on time or/and enhanced control channel unit resources; and
the base station indicating to the user equipment a carrier for transmitting an HARQ process of each of the unlicensed carriers through one of the EPDCCH sets and/or one of the EPDCCH subsets.

5. The method according to claim 4, wherein one of the EPDCCH sets comprises: a first EPDCCH set or a second EPDCCH set in the plurality of EPDCCH sets; and/or, one of the EPDCCH subsets is located on any one or more EPDCCH sets in the plurality of EPDCCH sets.

6. The method according to any one of claims 1 to 5, wherein the carrier for transmitting the HARQ process of the unlicensed carrier comprises one of the following: the unlicensed carrier, a licensed carrier in the plurality of carriers, and other unlicensed carriers except the unlicensed carrier in the plurality of carriers.

7. The method according to any one of claims 1 to 5, wherein the plurality of carriers comprise: a licensed shared access LSA carrier and/or a TV white space TVWS carrier.

8. The method according to any one of claims 1 to 5, wherein the HARQ process comprises: new transmission and retransmission of data.

9. A processing method of a hybrid automatic repeat request HARQ process, comprising:
a user equipment determining a carrier for transmitting an HARQ process of an unlicensed carrier according to an indication of a base station, wherein the base station configures a plurality of carriers for the user equipment, and the plurality of carriers comprise one or more of the unlicensed carriers; and
the user equipment receiving and/or transmitting the HARQ process of the unlicensed carrier on the determined carrier.

10. The method according to claim 9, wherein,
before the user equipment determines a carrier for transmitting the HARQ process of the unlicensed carrier according to the indication of the base station, the method further comprises:
the base station configuring each carrier in the plurality of carriers to be with or without a Carrier indicator field CIF, and indicating to the user equipment a carrier for transmitting an HARQ process of each of the unlicensed carriers through the CIF; and
a user equipment determining a carrier for transmitting an HARQ process of an unlicensed carrier according to an indication of a base station comprises: the user equipment determining a carrier for transmitting the HARQ process of the unlicensed carrier according to the Carrier indicator field CIF.

11. The method according to claim 9, wherein,
before the user equipment determines a carrier for transmitting the HARQ process of the unlicensed carrier according to the indication of the base station, the method further comprises:
the base station indicating to the user equipment a carrier for transmitting an HARQ process of each of the unlicensed carriers through Modulation Coding Scheme MCS in downlink control information DCI; and
the user equipment determining a carrier for transmitting the HARQ process of the unlicensed carrier according to the indication of the base station comprises: the user equipment determining a carrier for transmitting the HARQ process of the unlicensed carrier according to the MCS in the DCI.

12. The method according to claim 9, wherein,
before the user equipment determines a carrier for transmitting the HARQ process of the unlicensed carrier according to the indication of the base station, the method further comprises:
the base station configuring one or more Enhanced Physical Downlink Control Channel EPDCCH sets for the user equipment, dividing the one or more EPDCCH sets into a plurality of EPDCCH subsets on time or/and enhanced control channel unit resources, and indicating to the user equipment a carrier for transmitting an HARQ process of each of the unlicensed carriers through one of the EPDCCH sets and/or one of the EPDCCH subsets; and
the user equipment determining a carrier for transmitting the HARQ process of the unlicensed carrier according to the indication of the base station comprises: the user equipment determining a carrier for transmitting an HARQ process of an unlicensed carrier through one of the EPDCCH sets and/or one of the EPDCCH subsets.

13. The method according to any one of claims 9 to 12, wherein the carrier for transmitting the HARQ process of the unlicensed carrier comprises one of the following: the unlicensed carrier, a licensed carrier in the plurality of carriers, and other unlicensed carriers except the unlicensed carrier in the plurality of carriers.

14. The method according to any one of claims 9 to 12, wherein the plurality of carriers comprise: a licensed shared access LSA carrier and/or a TV white space TVWS carrier.

15. A hybrid automatic repeat request HARQ process indication apparatus, comprising:
a configuration module, configured to configure a plurality of carriers for a user equipment, wherein the plurality of carriers comprise one or more unlicensed carriers; and
an indication module, configured to: for each of the unlicensed carriers, indicate to the user equipment a carrier for transmitting an HARQ process of the unlicensed carrier by the base station.

16. The apparatus according to claim 15, wherein,
the configuration module is further configured to configure each carrier in the plurality of carriers to be with or without a Carrier indicator field CIF; and
the indication module indicates to the user equipment a carrier for transmitting an HARQ process of each of the unlicensed carriers through the CIF.

17. The apparatus according to claim 15, wherein the indication module is further configured to indicate to the user equipment a carrier for transmitting an HARQ process of each of the unlicensed carriers through Modulation Coding Scheme MCS in downlink control information DCI.

18. The apparatus according to claim 15, wherein,
the configuration module is further configured to configure one or more Enhanced Physical Downlink Control Channel EPDCCH sets for the user equipment, and divide the one or more EPDCCH sets into a plurality of EPDCCH subsets on time or/and enhanced control channel unit resources; and
the indication module is configured to indicate to the user equipment a carrier for transmitting an HARQ process of each of the unlicensed carriers through one of the EPDCCH sets and/or one of the EPDCCH subsets.

19. A processing apparatus of a hybrid automatic repeat request HARQ process, comprising:
a determination module, configured to determine a carrier for transmitting an HARQ process of an unlicensed carrier according to an indication of a base station, wherein the base station configures a plurality of carriers for the user equipment, and the plurality of carriers comprise one or more of the unlicensed carriers; and
a processing module, configured to receive and/or transmit the HARQ process of the unlicensed carrier on the determined carrier.

20. The apparatus according to claim 19, wherein the determination module determines a carrier for transmitting an HARQ process of an unlicensed carrier in one of the following ways:
determining a carrier for transmitting an HARQ process of an unlicensed carrier according to a Carrier indicator field CIF;
determining a carrier for transmitting an HARQ process of an unlicensed carrier according to Modulation Coding Scheme MCS in downlink control information DCI; and
determining a carrier for transmitting an HARQ process of an unlicensed carrier according to one of Enhanced Physical Downlink Control Channel EPDCCH sets and/or one of the EPDCCH subsets.

21. A base station, comprising the apparatus according to any one of claims 15 to 18.

22. A user equipment, comprising the apparatus according to claim 19 or 20.
A transmission system of a hybrid automatic repeat request HARQ process, comprising the base station according to claim 21 and the user equipment according to claim 22.
